Europäisches Patentamt

European Patent Office

Office européen des brevets

(11) Veröffentlichungsnummer: **0 170 174**
A1

## (12) EUROPÄISCHE PATENTANMELDUNG

(21) Anmeldenummer: **85109078.7**

(22) Anmeldetag: **19.07.85**

(51) Int. Cl.⁴: **F 17 D 5/06**
**G 01 M 3/18**

(30) Priorität: **20.07.84 DE 3426833**

(43) Veröffentlichungstag der Anmeldung:
**05.02.86 Patentblatt 86/6**

(84) Benannte Vertragsstaaten:
**AT BE CH DE FR GB IT LI LU NL SE**

(71) Anmelder: **W.L. Gore & Co. GmbH**
**Wernher-von-Braun-Strasse 18**
**D-8011 Putzbrunn(DE)**

(72) Erfinder: **Michahelles, Hans**
**Haus Nummer 16**
**D-8835 Pleinfeld-Gündersbach(DE)**

(74) Vertreter: **Klunker, Hans-Friedrich, Dr. et al,**
**Patentanwälte Klunker . Schmitt-Nilson . Hirsch**
**Winzererstrasse 106**
**D-8000 München 40(DE)**

(54) **Lecksuchvorrichtung für saure und basische Medien.**

(57) Lecksuchvorrichtung zur Überwachung von Behältern
und Rohrleitungen, die der Aufbewahrung oder dem Transport von sauren oder basischen Medien dienen, bei der ein
Indikatorkabel vorgesehen ist, welches aus mindestens zwei
gegeneinander isolierten elektrischen Leitern (1,3; 10,12;
20,21) besteht, daß zumindestens einer dieser beiden elektrischen Leiter (1,3; 10,12; 20,21) aus säure- oder laugenempfindlichen Aluminium besteht und daß Meßeinrichtungen
vorgesehen sind, welche die durch den Eingriff eines sauren
oder basischen Mediums verursachte Änderung der elektrischen Eigenschaften des Indikatorkabels anzeigen.

FIG 1

0170174

W.L. Gore & Co. GmbH
Wernher-von-Braun-Str. 18
8011 Putzbrunn

20. Juli 1984
G 5594    Wa/lu

B e s c h r e i b u n g

Lecksuchvorrichtung für saure und basische Medien

Die vorliegende Erfindung betrifft eine Lecksuchvorrichtung für saure und basische Medien.

Aufgrund der hohen Gefährdung für Gesundheit und Umwelt muß bei der Erzeugung, bei der Lagerung und beim Transport von sauren und basischen Medien vermieden werden, daß diese Flüssigkeiten infolge von nicht erkannten Undichtigkeiten unbemerkt austreten können.

Es sind Vorrichtungen bekannt, die eine Anzeige von Lecks bei Erdölanlagen ermöglichen. Diese Lecksuchvorrichtungen gehen von spezifischen Eigenschaften der Mineralöle aus. Dazu gehört z. B., daß Öle elektrisch nicht-leitend sind oder daß die Dielektrizitätskonstante  von Öl ungefähr doppelt so groß ist wie die von Luft. Derartige Eigenschaften sind bei den hier in Rede stehenden sauren und basischen Medien jedoch nicht gegeben.

Es ist deshalb die Aufgabe der vorliegenden Erfindung eine Lecksuchvorrichtung für saure und basische Medien zu schaffen, welche einfach und kostengünstig herzustellen ist und welche in einfacher Weise an den zu überwachenden Behältern und Rohrleitungen installiert werden kann.

Diese Aufgabe wird bei einer Vorrichtung gemäß dem Oberbegriff durch die kennzeichnenden Merkmale des Anspruchs 1 gelöst.

Diese Lösung weist eine Reihe von Vorteilen auf. Wie in den chemischen Standardwerken (z. B. Römpps "Chemisches Lexikon" 7. Auflage, Stuttgart 1972, S. 131) nachzulesen ist, wird Aluminium von stärkeren Säuren und Basen angegriffen. Es ist dagegen unempfindlich gegen Stoffe wie Öle, Benzin, Benzol, Fette, Lacke usw.. Dies bedeutet, daß die Lecksuchvorrichtung nur anspricht, wenn das Aluminium von stark sauren oder stark basischen Medien angegriffen wird. In technischen Anlagen häufig vorkommende Verunreinigungen z. B. mit Schmiermitteln, beeinflußen die Lecksuchvorrichtung nicht.

Die erfindungsgemäße Lecksuchvorrichtung kann in einfacher Weise als Koaxialkabel gefertigt werden. Dadurch ergibt sich eine besonders kostengünstige Herstellung, da die bei der Kabelfertigung üblichen Maschinen Verwendung finden können. Das Kabel besteht dann aus einem Innenleiter aus einem beliebig leitenden Teil, einem Dielektrikum und einer Aluminiumabschirmung, die z. B. aus entsprechenden Drähten geflochten werden kann. Als Dielektrikum kann z. B. eine poröse PTFE-Membran oder ein anderes geeignetes Material verwendet werden. Die Lecksuchvorrichtung kann zusätzlich mit einen Schutzmantel aus geflochtenem Polypropylengarn geschützt werden.

Diese Lecksuchvorrichtung funktioniert nun folgendermaßen: Das Kabel wird entlang der zu schützenden Rohrleitung oder in geeigneter Weise um den zu schützenden Behälter verlegt. Als Indikatorgröße wird die Kapazität zwischen Innenleiter und dem Aluminiumaußenleiter gemessen. Dazu wird eine an sich bekannte Kapazitäts-Meßvorrichtung verwendet, auf die hier nicht näher eingegangen werden muß. Wird nun die Aluminiumabschirmung infolge des Zutritts einer starken Säure oder einer starken Base teilweise oder gänzlich zerstört, so ändert sich die Kapazität, was zum Auslösen eines entsprechenden Alarms führt. Wenn die Kapazitäts-Meßeinrichtung mit einer Pulsreflektionseinrichtung versehen ist, was allgemein vorzuziehen ist, kann mit dieser Einrichtung nicht nur das Auftreten sondern auch die Lage des Lecks bestimmt werden.

Bei einer anderen Ausführungsform der vorliegenden Erfindung wird nicht die Kapazitätsänderung zwischen Innenleiter und Außenleiter, sondern die Widerstandsänderung des Aluminiumkabels als Indikatorgröße benutzt. Die Lecksuchvorrichtung wird dann vorzugsweise so aufgebaut, daß ein von einem Dielektrikum umgebener Leiter aus einem beliebigen Metall mit einem Sensorleiter aus Aluminium umwickelt wird. Der Sensorleiter und der Innenleiter des Kabels werden an dem einen Ende miteinander verbunden, wobei je nach Bedarf ein Wiuerstand oder eine entsprechende elektrische Schaltung dazwischengeschaltet werden kann. Auf der anderen Seite werden die beiden Leiter mit einer Widerstand-Meßeinrichtung verbunden. Wird der Aluminumleiter beim Austreten einer Säure oder einer Base zerstört, so läßt sich die entsprechende Widerstandsänderung durch die Widerstands-Meßeinrichtung feststellen. Auch hier kann wieder ein Pulsreflektionsverfahren angewandt werden, um das Leck zu lokalisieren. Durch eine Veränderung des Querschnitts des Aluminiumleiters kann die Empfindlichkeit der Lecksuchvorrichtung bei dieser Ausführungsform in einfacher Weise an den jeweiligen Einsatzfall angepaßt werden. Die Lecksuchvorrichtung wird um so empfindlicher, je dünner dieser Aluminiumleiter ist.

Auch diese Ausführungsform kann in einfacher und kostengünstiger Weise auf an sich bekannten Kabelherstellungsmaschinen gefertigt werden.

Zum Schutz des Kabels vor mechanische Beschädigung kann auch hier eine Ummantelung aus Polypropylengarn vorgesehen werden.

Bei einer weiteren zu bevorzugenden Ausführungsform wird als Indikatorkabel ein zwei-poliges, zumindest teilweise perforiertes Bandkabel verwendet. Dabei können beide Leiter aus Aluminium bestehen, es kann aber auch ein Leiter aus Kupfer und ein Leiter aus Aluminium ausgeführt werden. Die Isolation des Bandkabels wird perforiert, damit die Säure an den Aluminiumleiter gelangen kann. Dabei kann man sowohl die Isolation beider Leiter perforieren als auch nur die Perforation eines einzelnen Leiters. Wird nur einer der beiden Leiter perforiert, so hat dies den Vorteil, daß unterschieden werden kann, ob der Leiter durch den Eingriff von Säure zerfressen wurde, oder ob eine mechanische Beschädigung des Kabels vorliegt. Dazu muß, sobald der Stromkreis des Kabels unterbrochen worden ist, festgestellt werden, wo die Bruchstelle sich befindet. Ist die Bruchstelle in beiden Leitern vorhanden, so liegt eine mechanische Beschädigung vor, ist dagegen nur der Aluminiumleiter zerstört, so ist die Beschädigung aller Wahrscheinlichkeit nach durch den Austritt einer aggressiven Flüssigkeit entstanden.

Die Ausführung der Lecksuchvorrichtung mit einem Kabel hat den Vorteil, daß die Vorrichtung in einfacher Weise verlegt werden kann. So können auch längere Rohrleitungen ohne Probleme überwacht werden, in dem eines der beschriebenen Lecksuchkabel unterhalb der Rohrleitung verlegt wird. Ein weiterer Vorteil ergibt sich bei den eine Widerstands- oder Kapazitätsänderung erfassenden Einrichtungen dadurch, daß jedes Durchtrennen der Lecksuchkabel zu einer entsprechenden Veränderung der Anzeige führt. Dadurch wird auch eine mechanische Beschädigung der Lecksuchkabel sofort angezeigt. Aufgrund der geringen Kosten ist es aber dennoch möglich, zur Überwachung eines Behälters oder einer Rohrleitung ein redundantes System mit drei oder mehreren entsprechenden Lecksuchvorrichtungen einzusetzen.

Weitere Vorteile, Merkmale und Anwendungsmöglichkeiten der vorliegenden Erfindung ergeben sich aus der nachfolgenden Beschreibung von Ausführungsbeispielen in Verbindung mit den Figuren. Darin zeigen:

Fig. 1    die Ausführung der Lecksuchvorrichtung als Koaxialkabel,

Fig. 2    die Ausführung der Lecksuchvorrichtung mittels eines Sensorkabels,

Fig. 3    die Ausführung der Lecksuchvorrichtung mittels eines perforierten Bandkabels.

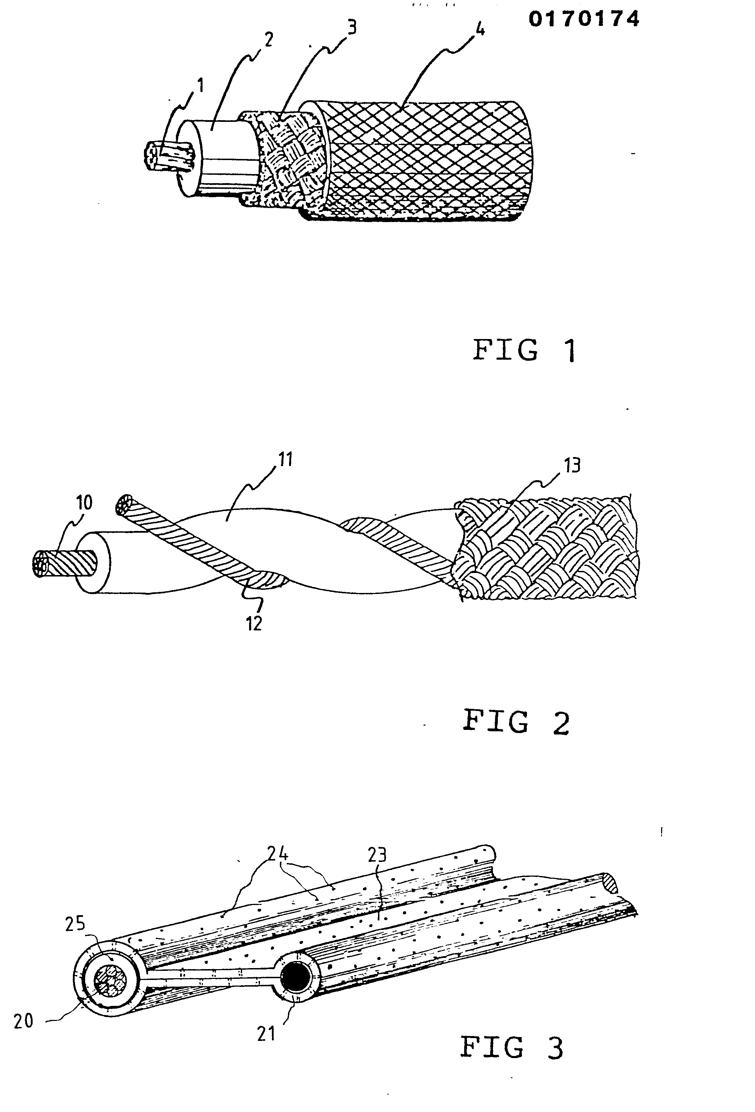

Fig. 1 zeigt den Aufbau der erfindungsgemäßen Lecksuchvorrichtung als Koaxialkabel. Der Innenleiter 1 besteht bei diesem Ausführungsbeispiel aus blankem, verlitztem Kupfer. Der Innenleiter 1 ist von dem Dielektrikum 2 umgeben, welches in zu bevorzugender Weise aus mikroporösem PTFE besteht. Selbstverständlich kann das Dielektrikum aber auch aus einem anderen nicht-leitendem Material bestehen. Die Abschirmung 3 besteht aus geflochtenen Aluminiumdrähten. Zum Schutz des Kabels vor mechanischer Beschädigung usw. ist ein Schutzmantel 4 aus Polypropylengarn vorgesehen.

Diese Kabel wird vorzugsweise mit einer hier nicht dargestellten Kapazitäts-Meßeinrichtung verwendet.

Eine andere Ausführungsform zeigt die Fig. 2. Der Innenleiter 10 besteht hier ebenfalls aus blankem, verlitztem Kupfer, das von einer Isolationsschicht 11 umhüllt ist, die aus PTFE besteht. Das aus Aluminium hergestellte Sensorkabel 12 ist um den Isolator gewickelt. Auch hier wurde ein verlitztes Kabel verwendet, es ist jedoch auch ohne weiteres möglich, ein massives Kabel einzusetzen. Zum Schutz des Kabels ist ebenfalls ein Schutzmantel aus geflochtenem Polypropylengarn vorgesehen. Dieses Kabel wird vorzugsweise mit einer hier nicht dargestellten Widerstands-Meßeinrichtung verwendet.

Fig. 3 zeigt die Ausführung der erfindungsgemäßen Lecksuchvorrichtung mittels eines perforierten Bandkabels. Die beiden Leiter 20, 21 bestehen aus Aluminium und weisen eine Isolierung 23 in Form eines Bandkabels auf. Das Bandkabel ist in dieser Darstellung vollständig mit Öffnungen 24 perforiert. Der Leiter 20 wird durch eine zusätzliche Isolierung 25 vom Zutritt der Säure geschützt. Es ist jedoch auch gleichermaßen möglich, die Perforation nur an der Isolation um den Leiter 21 vorzusehen, so daß auf die zusätzliche Isolation des Leiters 20 verzichtet werden kann.

A n s p r ü c h e

1. Lecksuchvorrichtung zur Überwachung von Behältern und Rohrleitungen, die der Aufbewahrung oder dem Transport von sauren oder basischen Medien dienen, d a - d u r c h   g e k e n n z e i c h n e t , daß ein Indikatorkabel vorgesehen ist, welches aus mindestens zwei gegeneinander isolierten elektrischen Leitern besteht, daß zumindestens einer dieser beiden elektrischen Leiter aus säure- oder laugenempfindlichem Aluminium besteht und daß Meßeinrichtungen vorgesehen sind, welche die durch den Eingriff eines sauren oder basischen Mediums verursachte Änderung der elektrischen Eigenschaften des Indikatorkabels anzeigen.

2. Lecksuchvorrichtung gemäß Anspruch 1, dadurch gekennzeichnet, daß das Indikatorkabel als Koaxialkabel ausgebildet ist, wobei ein Leiter als Innenleiter (1) ausgeführt ist, welcher von einem als Isolator dienendem Dielektrikum (2) umgeben ist, und daß dieses Dielektrikum (2) von einer Abschirmung aus Aluminium umhüllt ist.

3. Lecksuchvorrichtung gemäß Anspruch 1, dadurch gekennzeichnet, daß das Indikatorkabel als Sensorkabel ausgebildet ist, wobei ein Innenleiter (10) vorgesehen ist, welcher von einer Isolation (11) umgeben ist, um die ein Sensorkabel (12) aus Aluminium gewickelt ist.

4. Lecksuchvorrichtung gemäß einem der vorhergehenden Ansprüche, dadurch gekennzeichnet, daß das Indikatorkabel mit einer Schutzhülle (4, 13) aus geflochtenem Polypropylengarn umgeben ist.

5. Lecksuchvorrichtung gemäß Anspruch 1, dadurch gekennzeichnet, daß das Indikatorkabel als Bandkabel ausgebildet ist, wobei die Isolation (23) zumindest eines der beiden Leiter (21) mit Perforationen (24) versehen ist.

6. Lecksuchvorrichtung gemäß einem der Ansprüche 1, 2 und 4, dadurch gekennzeichnet, daß die Meßeinrichtungen die Änderungen der Kapazität anzeigen.

7. Lecksuchvorrichtung gemäß einem der Ansprüche 1, 3 und 4, dadurch gekennzeichnet, daß die Meßeinrichtungen die Änderung des elektrischen Widerstands anzeigen.

FIG 1

FIG 2

FIG 3

0170174

**0170174**

Nummer der Anmeldung

EP 85 10 9078

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US-A-4 404 516 (JOHNSON) <br> * Spalte 5, Zeile 24 - Spalte 6, Zeile 47 * | 1,7 | F 17 D 5/06 <br> G 01 M 3/18 |
| A | GB-A-1 323 076 (SMITH) <br> * Insgesamt * | 1,7 | |
| A | US-A-4 112 417 (HIMENO) <br> * Spalte 1, Zeile 60 - Spalte 2, Zeile 11 * | 1,7 | |
| A | FR-A-2 287 646 (ASAHI) <br> * Insgesamt * | 1,4,6 | |
| A | US-A-3 564 526 (BUTTS) <br> * Insgesamt * | 3,7 | RECHERCHIERTE SACHGEBIETE (Int. Cl 4) |
| A | US-A-3 365 661 (ZIMMERMAN) <br> * Spalte 2, Zeilen 32-47 * | 5 | F 17 D <br> G 01 M |

Der vorliegende Recherchenbericht wurde für alle Patentansprüche erstellt

| Recherchenort <br> DEN HAAG | Abschlußdatum der Recherche <br> 28-10-1985 | Prüfer <br> LEMERCIER D.L.L. |
|---|---|---|